# FASCICULE DE BREVET EUROPEEN

(11) **EP 1 598 997 B1**
(45) Date de publication et mention de la délivrance du brevet: **21.03.2007**
(21) Numéro de dépôt: 05290412.5
(22) Date de dépôt: 23.02.2005
(51) Int. Cl.: H04L 12/56

(54) **Routage au sein d'un réseau de communication**
Wegleitung in einem Kommunikationsnetzwerk
Routing in a communications network

(30) Priorité: 17.05.2004 FR 0450954
(43) Date de publication de la demande: 23.11.2005
(73) Titulaire: ALCATEL, 75008 Paris (FR)
(72) Inventeur: Preguica, Christophe, 91300 Massy (FR); Rombeaut, Jean-Pierre, 59600 Maubeuge (FR)
(74) Mandataire: Chaffraix, Sylvain

(56) Documents cités:
- WO-A-02/43335
- US-A1- 2004 003 111
- US-A1- 2004 081 152

## Description

La présente invention est relative aux réseaux mobiles dans lesquelles au moins certains des noeuds de réseau sont mobiles les uns par rapport aux autres et dont l'architecture n'est pas définie une fois pour toute. Elle concerne plus particulièrement le routage au sein de tels réseaux, c'est-à-dire la transmission des informations permettant l'acheminant des données au sein de ces réseaux.

Des travaux sur ces réseaux mobiles sont regroupés au sein de l'IETF (*Internet Engineering Task Force*) dans un groupe de travail portant le nom de MANET (pour *Mobile Ad-hoc NETwork,* en langue anglaise). Selon ces travaux, le réseau ne nécessite pas d'infrastructure fixe et peut donc fonctionner lorsque l'ensemble des noeuds sont mobiles. De tels réseaux sont appelés réseaux ad-hoc ou réseaux mobiles ad-hoc.

Dans les réseaux ad-hoc, tout comme dans les réseaux fixes basés sur la famille protocolaire IP (*Internet Protocol*), le fonctionnement du réseau n'est pas entièrement fixé à l'origine : la transmission des paquets de données au travers du réseau se fait sur la base de « routes » définies par des protocoles de routage. Entre deux points donnés, ces routes peuvent être différentes d'un paquet à l'autre.

Différents protocoles de routage existent actuellement dans les réseaux ad-hoc, notamment définis par le groupe de travail MANET. Parmi ceux-ci on peut citer les protocoles AODV, OLSR, DSR et TBRPF.

Certains de ces protocoles de routage sont « proactif ». Un protocole de routage est dit proactif lorsque les informations du réseau sont échangées en permanence afin que lorsqu'une route est demandée, celle-ci soit immédiatement disponible. Ces protocoles proactifs s'opposent aux protocoles réactifs selon lesquels les routes sont calculées à la demande, c'est-à-dire lorsqu'un paquet de données est à acheminer.

Les protocoles TBRPF et OLSR sont deux exemples de protocoles proactifs. Le protocole TBRPF est décrit par le RFC 3684 de l'IETF intitulé « Topology Dissemination *Based on Reversed-Path Forwarding (TBRPF).* Le protocole OLSR (*Optimized Link-State Routing*) défini par le RFC 3626 de l'IETF.

Ces protocoles proactifs présentent toutefois un inconvénient majeur. Ils se basent en effet sur un algorithme de Dijkstra et ils sont donc sujet à une explosion combinatoire dès lors que le nombre de noeuds dans le réseau grandit. Les ressources des noeuds sont alors majoritairement utilisées par ce protocole de routage pour le calcul des routes, au détriment de leur fonction première d'acheminement des paquets de données. Bien que ce chiffre dépende de la capacité de traitement des noeuds de réseau, on peut estimer qu'au-delà de 500 noeuds dans le réseau, ces protocoles de routage ne peuvent plus être utilisés avec des performances satisfaisantes.

Ce défaut majeur est partagé par les protocoles proactifs existants (TBRPF ou OLSR), ainsi que ceux à venir s'ils utilisent un algorithme de type Dijkstra ou tout autre algorithme de routage dont la complexité croit de façon exponentielle avec le nombre de noeuds dans le réseau.

La demande de brevet US 2004/003111 intitulée « *Protocol and Structure for Self-Organizing Network* » définit un nouveau protocole pour résoudre le problème des limites des algorithmes existants. De ce seul fait, la solution proposée est incompatible avec les protocoles existants (de type OLSR par exemple) : elle nécessite donc un re-développement complet des équipements, qui seront alors, de toute façon, incompatibles avec les réseaux déjà déployés.

Outre cet inconvénient majeur, la solution repose sur la détermination, fixe, d'un noeud particulier (« *cluster head* ») pour chaque îlot (« *cluster* ») ainsi que sur une organisation arborescente des noeuds à l'intérieur de chaque îlot.

Aussi, cette solution ressemble à celle exposée dans la demande de brevet américain US 2004/0081152 intitulée « *Arrangement for Router Attachements Between Roaming Mobile Routers in a Clusterd Network* ». Cette dernière décrit une solution à ce problème, dans lequel le réseau est organisé en îlots (« *cluster* »). Les noeuds de chaque îlot sont organisés sous forme d'une arborescence ayant pour racine un noeud particulier, appelé TLMR (« *Top Level Mobile Router* »). Ces noeuds TLMR sont en charge de transmettre le trafic, ainsi que les informations de routage, d'un îlot à un autre.

Toutefois, cette approche pose plusieurs problèmes, pour la plupart partagée par l'approche de la demande US 2004/003111.

Tout d'abord, l'ensemble du trafic provenant d'un îlot passe par un unique noeud TLMR. Il en découle un engorgement de ce noeud, provoquant de mauvaises performances du réseau dès que celui-ci devient de taille substantielle.

De surcroît, le trafic est transmis d'un îlot à un autre au travers de tunnels. Là aussi, le temps nécessaire à l'encapsulation et à la désencapsulation des paquets diminue les performances du réseau.

Par ailleurs, une telle architecture est par nature extrêmement sensible aux défaillances : si le TLMR d'un îlot est victime d'une panne, l'ensemble de l'îlot sera alors isolé du reste du réseau.

Un autre inconvénient est que les noeuds sont organisés en arborescence à l'intérieur de chaque îlot. Aussi, même s'il est proche du TLMR, les paquets d'un noeud donné devront remonter l'ensemble de la hiérarchie avant de parvenir au noeud TLMR. La conséquence est, ici aussi, une diminution des performances du réseau de communication.

Enfin, et surtout, la solution proposée est entièrement statique. Le TLMR est fixé par configuration, de sorte que le réseau ne peut pas réagir à l'évolution du trafic ou de son organisation spatiale. Les performances du réseau sont ici aussi impactées.

L'objectif visé par la présente invention est de palier ces inconvénients en permettant de gérer un réseau mobile ad-hoc, quelque soit le nombre de noeuds dans ce réseau, de façon dynamique, et en optimisant les performances.

Pour ce faire, l'invention a pour premier objet un réseau de communication comportant des équipements mobiles, qui se caractérise en ce qu'il est formé d'un ensemble d'îlots interconnectés par des sous-réseaux inter-îlots. Chaque équipement mobile d'un de ces îlots échange des messages de routage grâce à un premier moyen de routage avec d'autres équipements mobiles de son îlot, et certains de ces équipements mobiles échangent de surcroît des messages de routage grâce à un second moyen de routage avec les équipements mobiles appartenant à un sous-réseau inter-îlots.

L'invention a également pour objet un équipement mobile de réseau comportant des moyens de communications pour transmettre des paquets de données à un ou plusieurs autres équipements mobiles d'un premier îlot au sein d'un réseau mobile de communication, en fonction d'informations de routage échangées avec le ou lesdits autres équipements par des premiers moyens de routage conformément à un premier protocole de routage. Cet équipement mobile se caractérise en ce qu'il dispose en outre :
- De moyens de détection d'un nouvel équipement mobile appartenant à un second îlot du réseau mobile de communication,
- De moyens d'élection pour déterminer en fonction d'une politique d'élection, si le nouvel équipement mobile doit ou non être ajouté comme membre d'un sous-réseau inter-îlots,
- De seconds moyens de routage pour transmettre des informations de routage entre les équipements mobiles membres du sous-réseau inter-îlots et
- Des moyens de communications pour transmettre les informations de routage échangées par les premiers moyens de routage aux équipements mobiles membres du sous-réseau inter-îlots, et pour transmettre aux premiers moyens de routage les informations de routage reçues desdits équipements mobiles membres dudit sous-réseau inter-îlots, ainsi que des informations relatives au sous-réseau inter-îlots, conformément à un second protocole de routage.

Selon un mode de réalisation, l'équipement mobile de réseau dispose en outre de moyens de désignation pour déterminer si les moyens de communication doivent ou non être mis en oeuvre en fonction d'une politique de désignation.

Selon une mise en oeuvre de l'invention, le premier protocole de routage et le second protocole de routage sont des protocoles de routage proactifs. Ils peuvent par exemple être similaires et notamment du type TBRPF ou OLSR.

Selon un mode de réalisation, lorsque les moyens de communication sont mis en oeuvre par le moyen de désignation, les informations de routage contiennent des messages d'informations comportant :
- un identificateur de l'équipement mobile,
- Un identificateur du sous-réseau inter-îlots,
- Le nombre d'équipements mobiles appartenant à l'îlot et au sous-réseau inter-îlots,
- La liste de tous les sous-réseaux inter-îlots connus.

L'invention a également pour objet un procédé pour transmettre des paquets de données depuis un équipement mobile de réseau à un ou plusieurs autres équipements mobiles d'un premier îlot au sein d'un réseau mobile de communication, en fonction d'informations de routage échangées lors d'une première étape, avec le ou lesdits autres équipements par des premiers moyens de routage (MR1) conformément à un premier protocole de routage. Ce procédé se caractérise en ce qu'il dispose en outre des étapes de :
- détection d'un nouvel équipement mobile appartenant à un second îlot du réseau mobile de communication,
- élection pour déterminer en fonction d'une politique d'élection, si ledit nouvel équipement mobile doit ou non être ajouté comme membre d'un sous-réseau inter-îlots,
- transmission des informations de routage entre les équipements mobiles membre du sous-réseau inter-îlots, et
- communication des informations de routage échangées lors de la première étape, aux équipements mobiles membres du sous-réseau inter-îlots, et transmission aux premiers moyens de routage les informations de routage reçues des équipements mobiles membres du sous-réseau inter-îlots, ainsi que des informations relatives au sous-réseau inter-îlots, conformément à un second protocole de routage.

Selon un mode de réalisation de l'invention, le procédé dispose en outre d'une étape de désignation pour déterminer si ladite étape de communication doit ou non être mis en oeuvre en fonction d'une politique de désignation.

Selon une mise en oeuvre de l'invention, le premier protocole de routage et le second protocole de routage sont des protocoles de routage proactifs. Il peut par exemple s'agit de protocoles similaires, et notamment du type TBRPF ou OLSR.

Selon un mode de réalisation de l'invention, si l'étape de communication est mise en oeuvre, les informations de routage contiennent des messages d'informations comportant :
- Un identificateur de l'équipement mobile,
- Un identificateur du sous-réseau inter-îlots,
- Le nombre d'équipements mobile appartenant à l'îlot et au sous-réseau inter-îlots,
- La liste de tous les sous-réseaux inter-îlots connus.

Grâce à l'invention, même si chaque îlot a une taille limitée par les contraintes des protocoles de routages, la possibilité de disposer d'une pluralité d'îlots et de les connecter pour constituer un réseau, au moyen de sous-réseaux inter-îlots permet de s'affranchir de cette taille limite.

Entre autres avantages, l'invention permet donc de transmettre les informations de routage au sein d'un réseau de communication, quelque soit la taille de celui-ci.

Par ailleurs, grâce au mécanisme d'élection, l'invention permet de s'adapter de façon dynamique aux circonstances. Elle permet donc d'optimiser les ressources, de répartir le trafic sur plusieurs équipements élus, d'offrir de la redondance, etc.

L'invention et ses avantages apparaîtront de façon plus claire dans la description qui va suivre, en liaison avec les figures annexées.

La figure 1 schématise l'architecture fonctionnelle d'un équipement mobile de réseau, selon l'invention.

La figure 2 représente deux îlots connectés par un sous-réseau inter-îlots.

La figure 3 illustre la propagation des messages d'informations dans un réseau composé de deux îlots et de deux sous-réseaux inter-îlots.

### Architecture fonctionnelle de l'équipement mobile

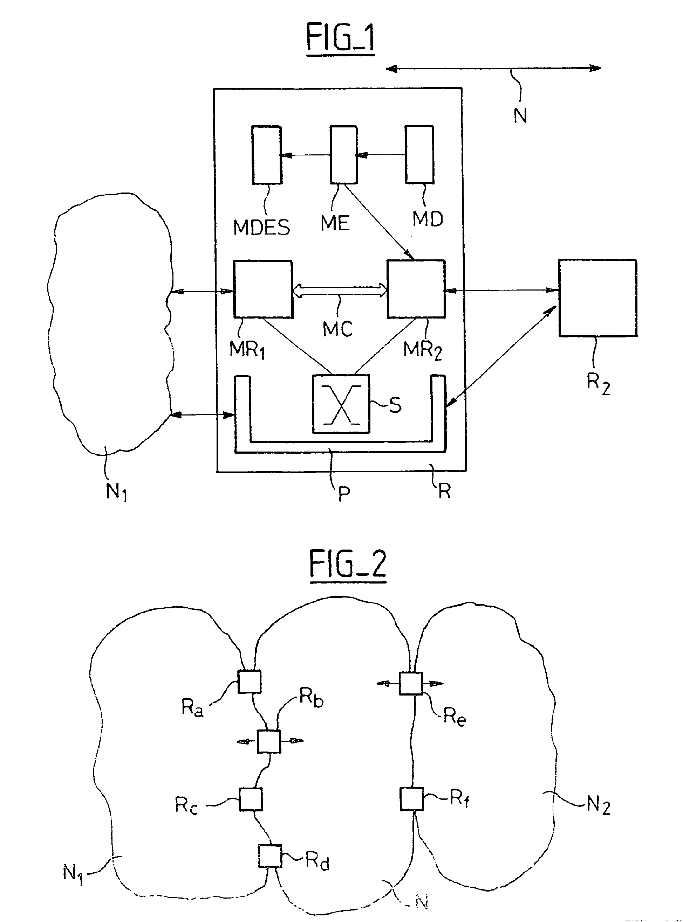

L'équipement R illustré sur la figure 1 est connecté à un îlot N₁ au moyen d'un ensemble de ports de communications P. De façon connue en soi, ces ports de communications P sont connectés ensemble au moyen d'une matrice de connexion S, permettant d'aiguiller les paquets de données reçus sur un premier port vers un second port. Afin de réaliser cet aiguillage, la matrice de connexion utilise une table de routage enrichie par des modules de routage.

L'équipement mobile R possède un premier moyen de routage MR₁ qui implémente un premier protocole de routage proactif. Il peut par exemple s'agir du protocole TBRPF ou du protocole OLSR, tous deux précédemment mentionnés.

Ce premier moyen de routage MR₁ permet l'échange d'informations de routage avec un ou plusieurs autres équipements mobiles appartenant à l'îlot N₁. Cet échange permet à l'équipement mobile d'avoir une connaissance suffisante sur le réseau pour lui permettre d'acheminer correctement les paquets de données reçus, c'est-à-dire d'enrichir correctement la table de rouge pour permettre un bon aiguillage par la matrice de connexion S.

L'équipement mobile R dispose de surcroît d'un moyen de détection M_{D} pour permettre la détection d'un nouvel équipement mobile de réseau R₂. Ce nouvel équipement n'appartient pas à l'îlot N₁ mais peut appartenir à un second îlot, non représenté sur la figure.

Par exemple, cet élément transmet de façon périodique un message dit « hello » comportant quelques informations le concernant, et indiquant son existence aux autres équipements se trouvant à portée radio de lui. Lorsque le moyen de détection MD de l'équipement mobile R reçoit un tel message, il consulte une base pour déterminer si cet équipement est connu ou non. Cette base peut notamment être la table de routage ou FIB *(Forwarding Information Base*) de l'équipement R.

Si cet équipement mobile n'appartient pas à cette table de routage, c'est donc qu'il s'agit d'un nouvel équipement mobile.

Dans le cadre d'une mise en oeuvre de l'invention pour le protocole TBRPF, ce message « hello » peut être de type « DA Hello ».

L'équipement mobile R comporte aussi un moyen d'élection ME pour déterminer en fonction d'une politique d'élection, si ce nouvel équipement mobile R₂ doit ou non être ajouté comme membre d'un sous-réseau inter-îlots N. D'une façon générale, il permet donc d' « élire » un nouvel équipement mobile comme membre d'un sous-réseau inter-îlots. Ce sous-réseau peut être créé à ce moment, ou bien être préalablement existant.

Ce moyen d'élection peut aussi être à même de prendre d'autres décisions, comme par exemple de retirer l'équipement mobile d'un sous-réseau inter-îlots préalablement existant.

Par conséquent, le moyen d'élection permet de s'adapter de façon dynamique aux circonstances.

La façon dont fonctionne ce moyen d'élection ME sera détaillée ultérieurement dans le paragraphe « mécanisme d'élection ».

Le moyen d'élection peut donner des instructions à un second moyen de routage MR₂, afin que celui-ci prenne en charge l'échange d'informations de routage au sein du sous-réseau inter-îlots indiqué par le moyen d'élection M_{E}, ou bien, au contraire, cesse son activité de routage et passe à un état non actif.

Le protocole de routage mis en oeuvre par le second moyen de routage MR₂ peut être identique ou différent de celui mis en oeuvre par le premier moyen de routage MR₁. Dans le cas où ils sont identiques, les deux moyens de routage peuvent alors être deux instances d'une même application logicielle. Ils disposent en outre de moyens de communication (MC) pour se communiquer des informations de routage, afin de permettre la propagation d'informations de routage depuis le premier îlot N₁ vers le sous-réseau inter-îlot N et vice-versa. La nature et la façon dont ses informations de routage sont propagées seront détaillées ultérieurement.

Selon une mise en oeuvre de l'invention, l'équipement mobile R peut en outre disposer d'un moyen de désignation MDES. Ce moyen de désignation est mis en oeuvre lorsqu'un nouvel équipement mobile R₂ a élu un autre équipement mobile pour faire partie d'un sous-réseau inter-îlot N, nouvellement créé ou préalablement existant. Ce moyen de désignation est apte à décider si les moyens de communication doivent ou non être mis en oeuvre en fonction d'une politique de désignation, c'est-à-dire sur les deux moyens de routages doivent ou non d'échanger les informations de routage.

Autrement dit, en fonction de cette politique de désignation, l'équipement mobile R peut ou non permettre la transmission des informations de routage entre le premier îlot N₁ et le sous-réseau inter-îlot N.

Cette caractéristique résout le problème supplémentaire de la limitation des flux formés par les informations de routage en ne donnant la fonction de « relais » qu'à un nombre restreint d'équipements mobiles.

La figure 2 schématise deux îlots N₁ et N₂ et un sous-réseau inter-îlots N connectant ces deux îlots.

Quatre équipements mobiles de l'îlot N₁ ont été « élus » pour faire partie également du sous-réseau inter-îlots N : il s'agit des équipements mobiles Rₐ, R_{b}, R_{c} et R_{d}. Ils constituent en quelque sort la « frontière » entre l'îlot N₁ et le sous-réseau inter-îlots N. Parmi ces 4 équipements mobiles, seul l'équipement R_{b} est désigné. Les informations de routage ne seront donc transmises que par lui, entre l'îlot N₁ et le sous-réseau inter-îlots N. Toutefois, chaque équipement mobile de l'îlot N₁ achemine normalement les informations de routage au sein de l'îlot N₁ et chaque équipement mobile élu achemine également les informations de routage au sein du sous-réseau inter-îlot N.

De la même façon, deux équipements Rₑ et R_{f} de l'îlot N₂ ont été « élus » pour faire partie également du sous-réseau inter-îlots N. Parmi ces 2 équipements mobiles, seul l'équipement Rₑ est désigné. Les informations de routage ne seront donc transmises que par lui, entre l'îlot N₂ et le sous-réseau inter-îlots N. Toutefois, comme précédemment pour l'îlot N₁, chaque équipement mobile de l'îlot N₂ achemine normalement les informations de routage au sein de l'îlot N₂ et chaque équipement mobile élu achemine également les informations de routage au sein du sous-réseau inter-îlot N.

Ainsi, par l'intermédiaire des équipements désignés Rₑ et R_{b}, des informations de routage peuvent être transmises entre les îlots N₁ et N₂ au travers du sous-réseau inter-îlots N.

Pour chacun des équipements mobiles, c'est le moyen de désignation (MDES) qui détermine si le moyen de communication (MC) doit ou non être mis en oeuvre pour permettre l'échange d'informations de routage entre les deux moyens de routage et donc entre l'îlot et le sous-réseau inter-îlots.

### Mécanisme d'élection

Le moyen d'élection ME, représenté sur la figure 1, a pour objet de déterminer si un équipement mobile doit faire partie d'une frontière entre un îlot et un sous-réseau inter-îlots ou non.

Il est notamment mis en oeuvre par un équipement mobile R lorsqu'un nouvel équipement mobile R₂ est détecté par le moyen de détection MD. Il détermine alors si ce nouvel équipement mobile doit ou non être ajouté comme membre d'un sous-réseau inter-îlots. Comme dit précédemment, ce sous-réseau peut être préalablement existant ou être créé à ce moment-là.

Le mécanisme d'élection peut mettre en oeuvre différentes politiques d'élection. Selon un mode de réalisation de l'invention, cette politique d'élection peut être comme suit :

Plusieurs cas se présentent suivant la situation dans laquelle se trouvent les équipements mobiles R et R₂.

Dans les 3 premières situations envisagées, on suppose qu'il n'existe pas de sous-réseau inter-îlots connectant les îlots auxquels appartiennent les équipements mobiles. On suppose de plus que les deux équipements mobiles appartiennent à deux îlots distincts.

Dans une première situation, les équipements mobiles R et R₂ n'appartiennent à aucun sous-réseau inter-îlots.

Chacun des équipements mobiles R et R₂ décide alors de créer un sous-réseau inter-îlots auxquels ils appartiendront tous deux.

Dans cette situation, ils échangent un message d'information listant l'ensemble des sous-réseaux inter-îlots dont ils ont eu connaissance par un protocole de routage qui sera détaillé ultérieurement.

Ces messages d'informations seront détaillés ultérieurement dans la description.

Dans cette liste, les sous-réseaux inter-îlots sont par exemple identifiés par des numéros. La politique d'élection peut consister à choisir le numéro le plus petit n'ayant pas déjà été affecté à un sous-réseau inter-îlots connu. Chacun des deux équipements mobiles mettant en oeuvre cette même politique, ils arrivent tous deux au même numéro et créé ainsi un unique nouveau sous-réseau inter-îlot.

Comme ils sont les uniques équipements mobiles à la frontière entre ce nouveau sous-réseau inter-îlots et leur îlot respectif, ils peuvent immédiatement devenir équipement mobile désigné, et commencer à transmettre les informations de routage entre ces îlots et le sous-réseau inter-îlots.

Dans une seconde situation, l'équipement mobile R n'appartient pas à un sous-réseau inter-îlots, mais l'équipement mobile R₂ appartient à un sous-réseau inter-îlots déjà constitué N.

La politique d'élection peut alors s'intéresser au nombre d'équipements mobiles appartenant à ce sous-réseau inter-îlots. Si ce nombre est inférieur à un seuil prédéfini (par exemple de l'ordre de 400), alors l'équipement mobile R₂ demande à l'équipement mobile R de se joindre au sous-réseau inter-îlot N.

Le moyen de routage MR₂ de l'équipement mobile peut alors être mis en oeuvre pour acheminer les informations de routage au sein du sous-réseau inter-îlots N.

De la même façon que précédemment, l'équipement mobile R peut directement devenir équipement mobile désigné, puisqu'il est le seul équipement mobile formant la frontière entre l'îlot N₁ et le sous-réseau inter-îlot N.

Si le nombre d'équipements mobiles appartenant au sous-réseau inter-îlots N est supérieur (ou égal) au seuil, alors la politique d'élection peut considérer deux sous cas :

Soit l'équipement mobile R₂ est un équipement désigné, et alors aucune communication peut n'être possible.

Soit l'équipement mobile R₂ n'est pas un équipement désigné. Dans ce dernier cas, il peut se retirer du sous-réseau inter-îlots N et constituer un nouveau sous-réseau inter-îlots dans lequel seuls seront membres les équipements R et R₂. Ce nouveau sous-réseau est constitué de la même façon que dans le premier cas précédemment décrit.

Dans une troisième situation, les deux équipements mobiles R et R₂ sont déjà membres de sous-réseaux inter-îlots, respectivement M (non représenté sur la figure) et N.

Le politique d'élection peut alors prévoir plusieurs sous-cas :

Dans un premier sous-cas, les nombres d'équipements mobiles membres des sous-réseau inter-îlots N et M sont inférieurs au seuil (ce seuil pouvant éventuellement être différent pour les deux sous-réseaux).

Dans ce cas, la politique d'élection peut prévoir un critère pour choisir lequel des deux équipements mobiles devra se retirer du sous-réseau inter-îlots correspondant. Ce critère peut être une priorité fixée à l'avance, la capacité de traitement de l'équipement mobile etc.

L'équipement mobile choisi pour quitter le sous-réseau inter-îlots auquel il appartenait rejoint ensuit l'autre sous-réseau inter-îlot d'une façon similaire à ce qui a été décrit ci-dessus.

Dans un second sous-cas, le nombre d'équipements mobiles dans le sous-réseau inter-îlots M a atteint le seuil, tandis que ce nombre dans le sous-réseau inter-îlots N est inférieur au seuil.

Si l'équipement mobile R est équipement désigné, alors on peut considérer qu'aucune communication n'est possible. Dans le cas contraire, l'équipement mobile R quitte le sous-réseau inter-îlots M et rejoint le sous-réseau inter-îlots N. La façon dont cet équipement mobile R quitte un premier sous-réseau pour en joindre un second est similaire à celle précédemment décrite.

Dans les situations suivantes, on suppose qu'il existe un sous-réseau inter-îlot connectant les deux îlots auxquelles appartiennent les équipements mobiles R et R₂. Ces situations peuvent être détectées par chacun des équipements car les messages d'informations échangés contiennent l'adresse de l'autre équipement mobile.

Dans une quatrième situation, les deux équipements mobiles R et R₂ n'appartiennent eux-mêmes à aucun sous-réseau inter-îlots.

Dans cette situation, si le nombre d'équipements mobiles appartenant au sous-réseau inter-îlots connectant les deux îlots a atteint le seuil, alors aucune action n'est entreprise. Dans le cas contraire (le nombre est inférieur au seuil), alors chacun des deux éléments émet une requête vers son équipement désigné afin d'entrer dans le sous-réseau inter-îlots.

Dans une cinquième situation, l'équipement mobile R₂ appartient à un sous-réseau inter-îlots distinct de celui établi entre les deux îlots. Dans cette situation, aucune action n'est entreprise.

Dans une sixième situation, l'équipement mobile R₂ appartient au sous-réseau inter-îlots établi entre les deux îlots.

Si le nombre d'équipements mobiles dans ce sous-réseau inter-îlots a atteint le seuil, alors aucune action n'est entreprise. Dans le cas contraire, l'équipement mobile R rejoint le sous-réseau inter-îlots.

Dans une septième situation, les deux équipements mobiles R et R₂ appartiennent à deux sous-réseaux inter-îlots différents et distincts d'un troisième sous-réseau inter-îlots connectant les deux îlots. Dans cette situation, aucune action n'est entreprise.

### Propagation d'information de routage

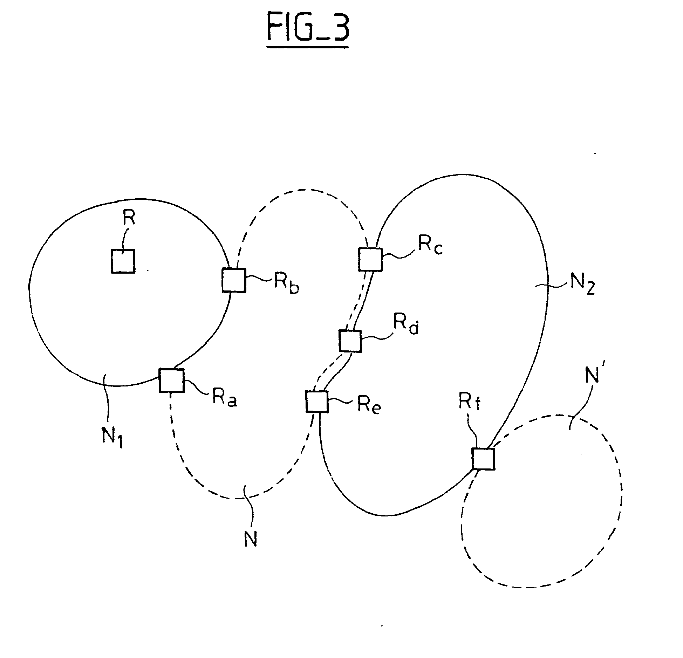

Dans la figure 3, les références indiquent des équipements mobiles et des réseaux distincts de ceux décrits dans les figures 1 et 2. Cette figure 3 représente deux îlots N₁ et N₂. L'îlot N₁ contient trois équipements mobiles R, Rₐ et R_{b}. L'équipement R n'appartient à aucun sous-réseau inter-îlots. Les équipements Rₐ et R_{b} appartiennent à un sous-réseau inter-îlots N. Seul l'équipement mobile Rₐ est un équipement désigné.

Ce sous-réseau inter-îlots connecte l'îlot N₁ à un autre îlot N₂.

L'îlot N₂ comporte les équipements mobiles R_{c}, R_{d}, Rₑ et R_{f}. Les équipements mobiles R_{c}, R_{d} et Rₑ font également parti du sous-réseau inter-îlots N, tandis que l'équipement mobile R_{f} fait parti d'un sous-réseau inter-îlots N'. Parmi les équipements mobiles R_{c}, R_{d} et Rₑ, seul l'équipement mobile Rₑ est un équipement désigné.

L'équipement mobile R_{f} étant le seul équipement appartenant à la fois à l'îlot N₂ et au sous-réseau inter-îlots N', il est aussi un équipement mobile désigné.

Cet équipement désigné R_{f} émet un message d'informations dans l'îlot N₂ et dans le sous-réseau inter-îlots N'. Selon un mode de réalisation ce message d'information est un message diffusé c'est-à-dire de type « multicast ».

Selon un mode de réalisation de l'invention, ces messages d'informations peuvent contenir :
- un identificateur de l'équipement désigné (un numéro, par exemple),
- optionnellement, une priorité de cet équipement, ou tout autre moyen permettant un arbitrage pour désigner un équipement lorsque plusieurs candidats sont possibles.
- Un identificateur du sous-réseau inter-îlots, pour lequel l'équipement est équipement désigné,
- Le nombre d'équipements appartenant au même îlot et au même sous-réseau inter-îlots,
- La liste de tous les sous-réseaux inter-îlots connus.
   Dans la situation décrite, l'équipement mobile R_{f} émettra donc un message d'information en indiquant
- Son identificateur
- optionnellement, une priorité de cet équipement, ou tout autre moyen permettant un arbitrage pour désigner un équipement lorsque plusieurs candidats sont possibles.
- qu'il est équipement désigné pour le sous-réseau inter-îlots N',
- que le nombre d'équipements appartenant au même îlot et au même sous-réseau inter-îlots est nul,
- que la liste de tous les sous-réseaux inter-îlots connus (hormis le sous-réseau inter-îlots N' puisque celui est indiqué ailleurs) est vide.

Ce message d'informations est reçu par les équipements mobiles de l'îlot N₂, notamment R_{c}, R_{d} et Rₑ. L'équipement Rₑ qui est équipement désigné transmet à son tour un message d'informations à la fois dans l'îlot N₂ et dans le sous-réseau inter-îlots N. Il met en outre à jour sa liste interne de sous-réseaux inter-îlots connus.

Le message d'informations émis par l'équipement mobile désigné R_{f} indique :
- Son identificateur
- optionnellement, une priorité de cet équipement, ou tout autre moyen permettant un arbitrage pour désigner un équipement lorsque plusieurs candidats sont possibles.
- qu'il est équipement désigné pour le sous-réseau inter-îlots N,
- que le nombre d'équipements appartenant au même îlot et au même sous-réseau inter-îlots est égale à 2,
- que la liste de tous les sous-réseaux inter-îlots connus (hormis le sous-réseau inter-îlots N) est constitué de l'identificateur du sous-réseau inter-îlots N'.

Similairement à précédemment, ce message d'information est reçu par les équipements mobiles appartenant au sous-réseau inter-îlots N et notamment par l'équipement désigné Rₐ. Celui-ci met sa base interne de sous-réseau connus à jour et transmet son propre message d'informations, à la fois dans ce même sous-réseau inter-îlot N et dans l'îlot N₁.

Ainsi, l'équipement mobile R₁ finit par recevoir un message d'information provenant de l'équipement désigné Rₐ. Il peut ainsi savoir qu'il existe au sein du réseau, deux sous-réseaux inter-îlots. Le premier, N, est dit « attaché », car il est accessible directement par son équipement désigné. L'autre N' est dit « distant » car il n'est pas accessible directement. Le sous-réseau inter-îlots N' est considéré comme distant car il fait partie de la liste des sous-réseaux connus dans le message d'informations connus et parce qu'aucun autre message d'informations reçus ne le mentionne comme sous-réseau « attaché » (i.e. provenant d'un équipement mobile désigné pour lui).

## Revendications

1. Équipement mobile de réseau comportant des moyens de communications pour transmettre des paquets de données à un ou plusieurs autres équipements mobiles d'un premier îlot au sein d'un réseau mobile de communication, en fonction d'informations de routage échangées avec le ou lesdits autres équipements par des premiers moyens de routage (MR1) conformément à un premier protocole de routage ; et des moyens de détection (MD) d'un nouvel équipement mobile appartenant à un second îlot dudit réseau mobile de communication, ledit équipement étant **caractérisé en ce qu**'il dispose en outre :
• De moyens d'élection (ME) pour déterminer en fonction d'une politique d'élection, si ledit nouvel équipement mobile doit ou non être ajouté comme membre d'un sous-réseau inter-îlots,
• De seconds moyens de routage (MR2) pour transmettre des informations de routage entre les équipements mobiles membres dudit sous-réseau inter-îlots et
• Des moyens de communications (MC) pour transmettre les informations de routage échangées par lesdits premiers moyens de routage aux équipements mobiles membres dudit sous-réseau inter-îlots, et pour transmettre audits premiers moyens de routage les informations de routage reçues desdits équipements mobiles membres dudit sous-réseau inter-îlots, ainsi que des informations relatives audit sous-réseau inter-îlots, conformément à un second protocole de routage.

2. Équipement mobile de réseau selon la revendication précédente, disposant en outre de moyens de désignation (MDES) pour déterminer si lesdits moyens de communication (MC) doivent ou non être mis en oeuvre en fonction d'une politique de désignation.

3. Équipement mobile de réseau selon l'une des revendications précédentes, dans lequel ledit premier protocole de routage et ledit second protocole de routage sont des protocoles de routage proactifs.

4. Équipement mobile de réseau selon la revendication précédente, dans lequel ledit premier protocole de routage et ledit second protocole de routage sont similaires et notamment du type TBRPF ou OLSR.

5. Équipement mobile de réseau selon l'une des revendications 2 à 4, dans lequel si lesdits moyens de communication sont mis en oeuvre par le moyen de désignation (MDES), lesdites informations de routage contiennent des messages d'informations comportant :
- un identificateur dudit équipement mobile,
- Un identificateur dudit sous-réseau inter-îlots,
- Le nombre d'équipements mobile appartenant audit îlot et audit sous-réseau inter-îlots,
- La liste de tous les sous-réseaux inter-îlots connus.

6. Procédé pour transmettre des paquets de données depuis un équipement mobile de réseau à un ou plusieurs autres équipements mobiles d'un premier îlot au sein d'un réseau mobile de communication, en fonction d'informations de routage échangées lors d'une première étape, avec le ou lesdits autres équipements par des premiers moyens de routage (MR1) conformément à un premier protocole de routage, ledit procédé comportant une étape de détection d'un nouvel équipement mobile appartenant à un second îlot dudit réseau mobile de communication, et étant **caractérisé en ce qu'**il dispose en outre des étapes de :
• élection pour déterminer en fonction d'une politique d'élection, si ledit nouvel équipement mobile doit ou non être ajouté comme membre d'un sous-réseau inter-îlots,
• transmission des informations de routage entre les équipements mobiles membre dudit sous-réseau inter-îlots, et
• communication des informations de routage échangées lors de ladite première étape, aux équipements mobiles membres dudit sous-réseau inter-îlots, et transmission audits premiers moyens de routage les informations de routage reçues desdits équipements mobiles membres dudit sous-réseau inter-îlots, ainsi que des informations relatives audit sous-réseau inter-îlots, conformément à un second protocole de routage.

7. Procédé selon la revendication précédente, disposant en outre d'une étape de désignation pour déterminer si ladite étape de communication doit ou non être mis en oeuvre en fonction d'une politique de désignation.

8. Procédé selon l'une des revendications 6 ou 7, dans lequel ledit premier protocole de routage et ledit second protocole de routage sont des protocoles de routage proactifs.

9. Procédé selon l'une des revendications 6 à 8, dans lequel ledit premier protocole de routage et ledit second protocole de routage sont similaires et notamment du type TBRPF ou OLSR.

10. Procédé selon l'une des revendications 7 à 9, dans lequel si l'étape de communication est mise en oeuvre, lesdites informations de routage contiennent des messages d'informations comportant :
- un identificateur dudit équipement mobile,
- Un identificateur dudit sous-réseau inter-îlots,
- Le nombre d'équipements mobile appartenant audit îlot et audit sous-réseau inter-îlots,
- La liste de tous les sous-réseaux inter-îlots connus.

11. Réseau de communication comportant des équipements mobiles, **caractérisé en ce qu**'il est formé d'un ensemble d'îlots interconnectés par des sous-réseaux inter-îlots, chaque équipement mobile d'un desdits îlots échange des messages de routage grâce à un premier moyen de routage avec d'autres équipements mobiles de son îlot, et certains desdits équipements mobiles échangent de surcroît des messages de routage grâce à un second moyen de routage avec les équipements mobiles appartenant à un sous-réseau inter-îlots.

## Claims

1. An item of mobile network equipment including communication means for transmitting data packets to one or more other items of mobile equipment in a first cluster in a mobile communications network, according to routing information exchanged with said other item(s) of equipment through first routing means (MR 1) using a first routing protocol; and detection means (MD) for detecting a new item of mobile equipment belonging to a second cluster in said mobile communications network, said item of equipment being **characterized in that** it is also provided with:
• election means (ME) for determining, according to an election policy, whether or not said new item of mobile equipment should be added as a member of an inter-cluster subnetwork;
• second routing means (MR2) for transmitting routing information between the items of mobile equipment that are members of said inter-cluster subnetwork; and
• communication means (MC) for transmitting the routing information exchanged by said first routing means to the items of mobile equipment that are members of said inter-cluster subnetwork, and for transmitting to said first routing means the routing information received from said items of mobile equipment that are members of said inter-cluster subnetwork, as well as information relating to said inter-cluster subnetwork, using a second routing protocol.

2. An item of mobile network equipment according to the preceding claim, also provided with naming means (MDES) for determining whether or not said communication means (MC) should be implemented according to a naming policy.

3. An item of mobile network equipment according to either preceding claim, in which said first routing protocol and said second routing protocol are proactive.

4. An item of mobile network equipment according to the preceding claim, in which said first routing protocol and said second routing protocol are similar and in particular are of the TBRPF or OLSR type.

5. An item of mobile network equipment according to any one of claims 2 to 4, in which, if said communication means are implemented by the naming means (MDES), said routing information contains information messages including:
- an identifier of said item of mobile equipment;
- an identifier of said inter-cluster subnetwork;
- the number of items of mobile equipment belonging to said cluster and to said inter-cluster subnetwork; and
- the list of all the known inter-cluster subnetworks.

6. A method of transmitting data packets from an item of mobile network equipment to one or more other items of mobile equipment in a first cluster in a mobile communications network, according to routing information exchanged during a first step with said other items of equipment by means of first routing means (MR1) using a first routing protocol, said method including a step consisting in detecting a new item of mobile equipment belonging to a second cluster in said mobile communications network, and being **characterized in that** it further includes the following steps:
• electing so as to determine, according to an election policy, whether or not said new item of mobile equipment should be added as a member of an inter-cluster subnetwork;
• transmitting routing information between the items of mobile equipment that are members of said inter-cluster subnetwork; and
• communicating the routing information exchanged during said first step, to the items of mobile equipment that are members of said inter-cluster subnetwork, and transmitting to said first routing means the routing information received from said items of mobile equipment that are members of said inter-cluster subnetwork, as well as information relating to said inter-cluster subnetwork, using a second routing protocol.

7. A method according to the preceding claim, further including a naming step for determining whether or not said communication step should be implemented according to a naming policy.

8. A method according to claim 6 or claim 7, in which said first routing protocol and said second routing protocol are proactive.

9. A method according to any one of claims 6 to 8, in which said first routing protocol and said second routing protocol are similar and in particular of the TBRPF or OLSR type.

10. A method according to any one of claims 7 to 9, in which if the communication step is implemented, said routing information contains information messages including:
- an identifier of said item of mobile equipment;
- an identifier of said inter-cluster subnetwork;
- the number of items of mobile equipment belonging to said cluster and said inter-cluster subnetwork; and
- the list of all the known inter-cluster subnetworks.

11. A communications network including items of mobile equipment, said network being **characterized in that** it is formed from a set of clusters interconnected by inter-cluster subnetworks, each item of mobile equipment in said clusters exchanging routing messages through first routing means with other items of mobile equipment in their cluster, and some of said items of mobile equipment also exchanging routing messages through second routing means with the items of mobile equipment belonging to an inter-cluster subnetwork.

## Patentansprüche

1. Mobile Netzwerkausrüstung, die Kommunikationsmittel enthält, um Datenpakete zu einer oder mehreren anderen mobilen Ausrüstungen einer ersten Insel in einem mobilen Kommunikationsnetzwerk zu übertragen, in Abhängigkeit von Wegleitungsinformationen, die durch erste Wegleitungsmittel (MR1) gemäß einem ersten Wegleitungsprotokoll mit der oder den anderen Ausrüstungen ausgetauscht werden; und Mittel zum Erfassen (MD) einer neuen mobilen Ausrüstung, die zu einer zweiten Insel dieses mobilen Kommunikationsnetzwerks gehört, wobei diese Ausrüstung **dadurch gekennzeichnet** wird, dass sie außerdem über folgendes verfügt:
• Mittel zum Wählen (ME), um in Abhängigkeit von einer Wahlpolitik zu bestimmen, ob die neue mobile Ausrüstung als Mitglied eines Inter-Insel-Unternetzes hinzugefügt werden soll oder nicht,
• Zweite Wegleitungsmittel (MR2), um Wegleitungsinformationen zwischen den mobilen Ausrüstungen zu übertragen, die Mitglieder dieses Inter-Insel-Unternetzes sind, und
• Kommunikationsmittel (MC), um die von diesen ersten Wegleitungsmitteln ausgetauschten Wegleitungsinformationen an die mobilen Ausrüstungen zu übertragen, die Mitglieder dieses Inter-Insel-Unternetzes sind, und um an diese ersten Wegleitungsmittel die Wegleitungsinformationen zu übertragen, die von diesen mobilen Ausrüstungen, die Mitglieder dieses Inter-Insel-Unternetzes sind, empfangen wurden, sowie Informationen, die sich auf dieses Inter-Insel-Unternetz beziehen, gemäß einem zweiten Wegleitungsprotokoll.

2. Mobile Netzwerkausrüstung gemäß dem vorstehenden Anspruch, die außerdem über Mittel zur Designation (MDES) verfügt, um zu bestimmen, ob diese Kommunikationsmittel (MC) in Abhängigkeit von einer Designationspolitik eingesetzt werden sollen oder nicht.

3. Mobile Netzwerkausrüstung gemäß einem der vorstehenden Ansprüche, bei der dieses erste Wegleitungsprotokoll und dieses zweite Wegleitungsprotokoll proaktive Wegleitungsprotokolle sind.

4. Mobile Netzwerkausrüstung gemäß dem vorstehenden Anspruch, bei der dieses erste Wegleitungsprotokoll und dieses zweite Wegleitungsprotokoll vergleichbar sind und insbesondere vom Typ TBRPF oder OLSR.

5. Mobile Netzwerkausrüstung gemäß einem der Ansprüche 2 bis 4, bei der diese Wegleitungsinformationen, wenn diese Kommunikationsmittel von dem Designationsmittel (MDES) eingesetzt werden, Informationsmeldungen enthalten, die folgendes einschließen:
- einen Identifikator dieser mobilen Ausrüstung,
- einen Identifikator dieses Inter-Insel-Unternetzes,
- die Anzahl der mobilen Ausrüstungen, die zu dieser Insel und zu diesem Inter-Insel-Unternetz gehören,
- die Liste aller bekannten Inter-Insel-Unternetze.

6. Verfahren zum Übertragen von Datenpaketen ab einer mobilen Netzwerkausrüstung zu einer oder mehreren anderen mobilen Ausrüstungen einer ersten Insel in einem mobilen Kommunikationsnetzwerk, in Abhängigkeit von Wegleitungsinformationen, die in einem ersten Schritt durch erste Wegleitungsmittel (MR1) gemäß einem ersten Wegleitungsprotokoll mit dieser oder diesen anderen Ausrüstung/en ausgetauscht werden, wobei dieses Verfahren einen Schritt Erfassen einer neuen mobilen Ausrüstung beinhaltet, die zu einer zweiten Insel dieses mobilen Kommunikationsnetzwerks gehört, und **dadurch gekennzeichnet ist, dass** es außerdem folgende Schritte beinhaltet:
• Wählen, um in Abhängigkeit von einer Wahlpolitik zu bestimmen, ob die neue mobile Ausrüstung als Mitglied eines Inter-Insel-Unternetzes hinzugefügt werden soll oder nicht,
• Übertragung der Wegleitungsinformationen zwischen den mobilen Ausrüstungen, die Mitglied dieses Inter-Insel-Unternetzes sind, und
• Mitteilung der Wegleitungsinformationen, die in dem ersten Schritt ausgetauscht werden, an die mobilen Ausrüstungen, die Mitglied dieses Inter-Insel-Unternetzes sind, und Übertragung der Wegleitungsinformationen, die von diesen mobilen Ausrüstungen, die Mitglieder dieses Inter-Insel-Unternetzes sind, empfangen wurden, sowie Informationen, die sich auf dieses Inter-Insel-Unternetz beziehen, gemäß einem zweiten Wegleitungsprotokoll, an die ersten Wegleitungsmittel.

7. Verfahren gemäß dem vorstehenden Anspruch, das außerdem über einen Schritt Designation verfügt, um zu bestimmen, ob dieser Kommunikationsschritt in Abhängigkeit von einer Designationspolitik eingesetzt werden soll oder nicht.

8. Verfahren gemäß einem der Ansprüche 6 oder 7, bei dem dieses erste Wegleitungsprotokoll und dieses zweite Wegleitungsprotokoll proaktive Wegleitungsprotokolle sind.

9. Verfahren gemäß einem der Ansprüche 6 bis 8, bei dem dieses erste Wegleitungsprotokoll und dieses zweite Wegleitungsprotokoll vergleichbar sind und insbesondere vom Typ TBRPF oder OLSR.

10. Verfahren gemäß einem der Ansprüche 7 bis 9, bei dem diese Wegleitungsinformationen, wenn der Schritt Kommunikation eingesetzt wird, Informationsmeldungen enthalten, die folgendes einschließen:
- einen Identifikator dieser mobilen Ausrüstung,
- einen Identifikator dieses Inter-Insel-Unternetzes,
- die Anzahl der mobilen Ausrüstungen, die zu dieser Insel und zu diesem Inter-Insel-Unternetz gehören,
- die Liste aller bekannten Inter-Insel-Untemetze.

11. Kommunikationsnetzwerk, das mobile Ausrüstungen enthält, **dadurch gekennzeichnet, dass** es aus einem Komplex von Inseln besteht, die durch Inter-Insel-Untemetze zusammengeschaltet sind, wobei jede mobile Ausrüstung einer dieser Inseln mit Hilfe eines ersten Wegleitungsmittels Wegleitungsmeldungen mit anderen mobilen Ausrüstungen ihrer Insel austauscht, und einige dieser mobilen Ausrüstungen außerdem mit Hilfe eines zweiten Wegleitungsmittels Wegleitungsmeldungen mit den mobilen Ausrüstungen austauschen, die zu einem Inter-Insel-Unternetz gehören.
